# FASCICULE DE BREVET EUROPEEN

(11) **EP 1 496 734 B1**
(45) Date de publication et mention de la délivrance du brevet: **02.04.2008**
(21) Numéro de dépôt: 03746338.7
(22) Date de dépôt: 11.04.2003
(51) Int. Cl.: A01D 78/10

(54) **MACHINE DE FENAISON**
HEUWERBUNGSMASCHINE
HAYING MACHINE

(30) Priorité: 16.04.2002 FR 0204834
(43) Date de publication de la demande: 19.01.2005
(73) Titulaire: KUHN S.A., 67706 Saverne Cedex (FR)
(72) Inventeur: BRENEUR, David, F-67700 Saverne (FR)
(74) Mandataire: Andres, Jean-Claude
(86) Numéro de dépôt international: PCT/FR2003/001156
(87) Numéro de publication internationale: WO 2003/086045

(56) Documents cités:
- EP-A- 0 316 560
- EP-A- 0 701 771
- EP-A- 0 784 920
- DE-A- 19 933 779
- FR-A- 2 525 854
- GB-A- 1 034 911
- US-A- 5 274 990

## Description

La présente invention se rapporte à une machine de fenaison, notamment pour l'andainage de fourrage, comportant un bâti portant au moins une paire de rotors d'andainage pouvant être entraînée en rotation autour d'axes supports sensiblement verticaux, lesquels rotors sont liés à des bras porteurs qui se situent sensiblement dans un même plan perpendiculaire à la direction d'avancement, l'un à droite et l'autre à gauche du bâti et qui sont articulés sur ledit bâti au moyen d'axes d'articulation autour desquels ils peuvent être déplacés d'une position de travail dans laquelle ils sont sensiblement horizontaux dans une position de transport dans laquelle ils sont sensiblement verticaux, et vice versa, et dans laquelle position de transport les bras porteurs sont bloqués par des moyens de verrouillage.

La mise en position sensiblement verticale des bras porteurs et des rotors permet de réduire considérablement la largeur de la machine. Cela permet de la déplacer aisément sur les voies publiques. Dans cette position il est toutefois nécessaire d'immobiliser lesdits bras afin d'empêcher leur retour accidentel en position de travail.

Sur une machine connue (EP 784 920) qui comporte les caractéristiques du préambule de la revendication 1, l'immobilisation des bras porteurs en position de transport est effectuée au moyen de verrous qui se situent sur une pièce solidaire du bâti et qui s'accrochent sur lesdits bras à proximité de leurs axes d'articulation sur ledit bâti. Ces verrous relient alors les bras porteurs au bâti. Lorsque la machine passe sur des dénivellations, ils subissent d'intenses contraintes dues aux forces exercées sur eux par les bras porteurs avec d'importants bras de leviers. Ils subissent alors une forte usure qui peut rapidement mettre en cause la sécurité durant les déplacements. Ces verrous doivent donc être particulièrement résistants, ce qui les rend volumineux et difficiles à manoeuvrer. De plus, ces verrous doivent être manoeuvrés depuis le tracteur, ce qui est généralement fastidieux à faire.

Le document GB 1 034 911 se rapporte à une machine de fenaison comportant un carter sur lequel sont articulées deux poutres munies de rotors. Ces poutres sont déplaçables manuellement dans une position de transport dans laquelle elles sont dirigées vers le haut et sont bloquées l'une par rapport à l'autre au moyen d'un crochet qui doit également être déplacé manuellement. Ces opérations manuelles sont fastidieuses. De ce fait, elles peuvent être omises, ce qui peut être la cause d'accidents.

La présente invention a pour but de proposer une machine telle que décrite dans l'introduction et qui ne comporte pas les inconvénients précités.

A cet effet, une importante caractéristique de l'invention consiste en ce que les bras porteurs sont déplacés au moyen de vérins hydrauliques et que les moyens de verrouillage sont constitués par un verrou articulé sur un des bras porteurs d'au moins une paire de rotors et par un arrêt disposé sur l'autre bras porteur, ledit verrou reliant lesdits bras porteurs entre eux et les bloquant l'un par rapport à l'autre en position de transport, et en ce que la tige du vérin hydraulique proche dudit arrêt comporte un doigt de manoeuvre pour dégager automatiquement le verrou de cet arrêt en vue de la mise en position de travail.

Cette disposition des moyens de verrouillage sur les bras porteurs permet de les éloigner du bâti et des axes d'articulation desdits bras sur le bâti. Ils peuvent par exemple se situer à une distance desdits axes qui est au moins égale à la moitié de la longueur des bras porteurs lorsqu'ils sont en position de transport. Les contraintes qui s'exercent sur les moyens de verrouillage sont alors considérablement réduites. La tenue de ces moyens de verrouillage et la sécurité sont ainsi améliorées. En sus, ces moyens peuvent être simples et moins onéreux.

Grâce au dégagement automatique du verrou, l'utilisateur n'a plus besoin d'intervenir pour débloquer les bras porteurs des rotors en vue de la mise en position de travail.

Selon une autre caractéristique de l'invention, le bâti comporte des butées arrêtant les bras porteurs lorsqu'ils arrivent en position de transport et qui sont distantes des moyens de verrouillage. La position des bras porteurs pour le transport est ainsi définie d'une manière très précise par rapport au bâti.

Selon une autre caractéristique de l'invention, les bras porteurs comportent des moyens d'immobilisation qui sont distants de moyens de verrouillage. De ce fait, ces moyens d'immobilisation empêchent pratiquement les bras porteurs de bouger l'un par rapport à l'autre en position de transport. On obtient ainsi une liaison quasiment rigide entre le bâti et les bras porteurs au transport.

D'autres caractéristiques et avantages de l'invention ressortiront des revendications et de la description ci-après d'un exemple de réalisation non limitatif de l'invention, avec références aux dessins annexés dans lesquels :
- la figure 1 représente une vue de dessus d'une machine selon l'invention en position de travail,
- la figure 2 représente une vue simplifiée d'un bras porteur d'un rotor,
- la figure 3 représente une vue de détail d'une paire de bras porteurs lors de la mise en position de transport,
- la figure 4 représente une vue similaire à celle de la figure 3 avec la paire de bras porteurs en position de transport.

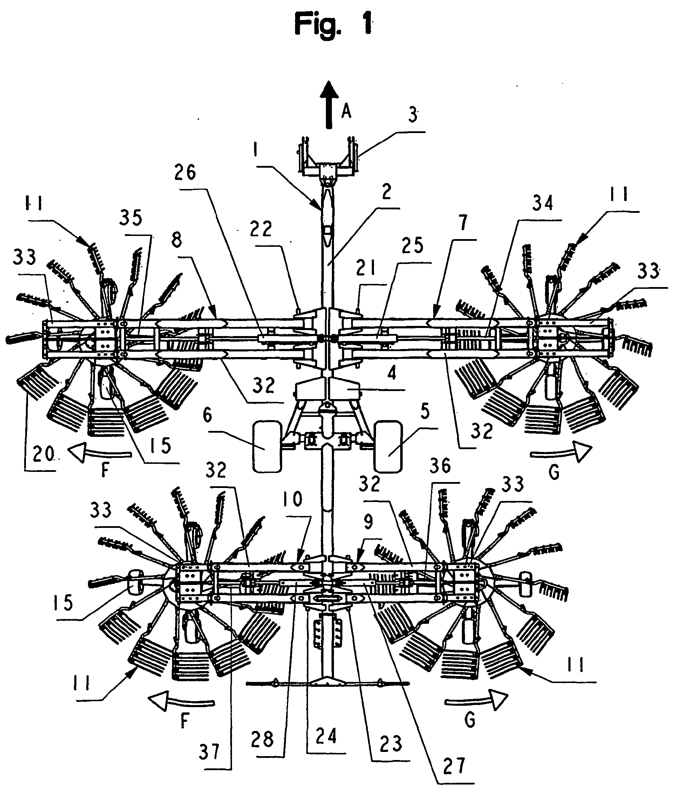

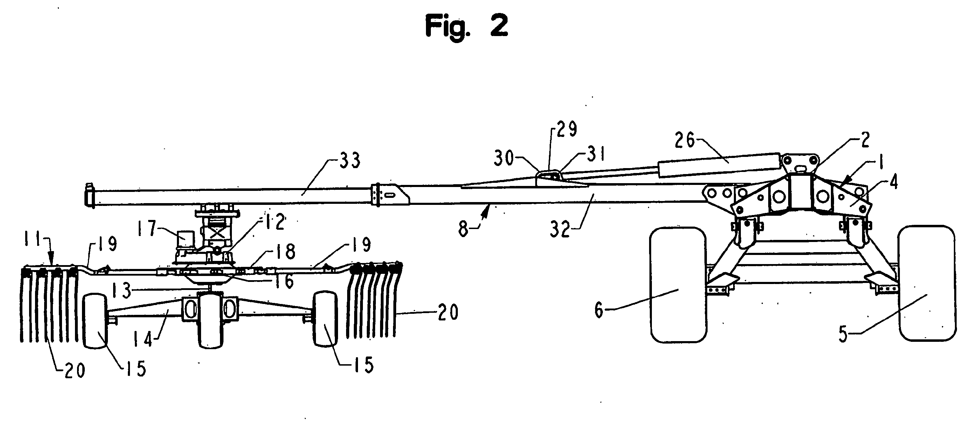

Telle qu'elle est représentée sur les figures 1 et 2, la machine selon l'invention comporte un bâti (1). Celui-ci est constitué par une poutre centrale (2) qui possède à son extrémité avant un dispositif d'accouplement (3) pour l'accrocher à un tracteur d'entraînement et, en arrière dudit dispositif (3), un support (4) avec deux roues de déplacement (5 et 6) qui reposent sur le sol. Le bâti (1) comporte également quatre bras (7, 8, 9 et 10) portant chacun un rotor (11) destiné à andainer des produits tels que de l'herbe ou de la paille fauchée étalée sur le sol. Ces bras (7 à 10) sont disposés par paires dont l'une se situe vers l'avant de la poutre centrale (2) de l'autre vers l'arrière de celle-ci. Les deux bras porteurs (7 et 8, 9 et 10) de chaque paire se situent sensiblement dans un même plan perpendiculairement à la direction d'avancement (A), l'un à droite et l'autre à gauche de la poutre (2). Le nombre de paires de rotors (11) et de bras porteurs (7 à 10) peut varier en fonction de la largeur de travail de la machine.

Chaque rotor (11) possède un carter (12) qui est relié au bras porteur (7 à 10) correspondant. Dans ce carter (12) est logé un axe support (13) sensiblement vertical. Cet axe (13) s'étend vers le bas et porte à son extrémité inférieure un support (14) avec plusieurs branches équipées de roues porteuses (15) situées sous le rotor (11). Sur la partie de l'axe (13) qui est comprise entre le carter (12) et le support (14) est disposé un boîtier (16). Celui-ci est monté sur ledit axe (13) de telle sorte qu'il puisse être entraîné en rotation. Le côté supérieur du boîtier (16) est muni d'une couronne dentée qui se situe dans le volume défini par le carter (12). Cette couronne engrène avec un pignon d'entraînement qui se trouve également dans le carter (12). Ledit pignon est solidaire d'un arbre qui peut être lié à un moteur hydraulique (17) assurant l'entraînement en rotation. Ledit arbre peut aussi être relié, par l'intermédiaire d'arbres de transmission, à un arbre de prise de force du tracteur.

Le boîtier (16) est muni de paliers (18) à travers lesquels passent des bras (19). Ceux-ci s'étendent en forme de rayons et portent à leurs extrémités extérieures des outils d'andainage (20) constitués par des fourches. Ils sont logés dans lesdits paliers (18) de manière à pouvoir tourner sur eux-mêmes. Sur la partie de l'axe (13) qui se situe dans le boîtier (16) est montée une came fixe destinée à commander les bras porte-outils (19) durant le travail d'andainage. Pour cela chacun de ces bras (19) possède à son extrémité qui s'étend à l'intérieur du boîtier (16) un levier avec un galet qui est guidé d'une manière connue dans une gorge de la came.

Les bras porteurs (7 à 10) sont constitués par deux poutres parallèles et reliées entre elles. Ils sont articulés sur la poutre centrale (2) au moyen d'axes d'articulation (21 à 24) sensiblement horizontaux et dirigés dans la direction d'avancement (A). A chaque bras porteur (7 à 10) est associé un vérin hydraulique (25 à 28) qui permet de le déplacer autour de son axe d'articulation (21 à 24) d'une position de travail dans laquelle il est sensiblement horizontal dans une position de transport dans laquelle il est sensiblement vertical et vice versa. Ces vérins hydrauliques (25 à 28) sont articulés sur la poutre (2) et sur les bras porteurs (7 à 10). A cet effet, ces bras porteurs (7 à 10) comportent des plaques (29) munies de trous oblongs (30) dans lesquels sont engagés des axes (31) qui sont solidaires des tiges desdits vérins hydrauliques (25 à 28) (voir figures 2 à 4). Ces derniers peuvent être reliés au dispositif hydraulique du tracteur et être commandés depuis celui-ci.

Les bras porteurs (7 à 10) des rotors (11) sont réalisés en deux parties télescopiques (32 et 33). La première partie (32) de chaque bras (7 à 10) est liée à l'axe d'articulation correspondant (21 à 24) sur la poutre centrale (2) tandis que la deuxième partie (33) porte le rotor (11) correspondant.

Chaque deuxième partie (33) peut coulisser par rapport à la première partie (32) pour faire varier la position du rotor (11) correspondant par rapport à la poutre (2) entre une position intérieure où il se situe près de la poutre (2) et une position extérieure où il est éloigné de la poutre (2).

Chaque bras porteur (7 à 10) comporte un vérin hydraulique (34 à 37) dont une extrémité est reliée à la première partie (32) et l'autre extrémité à la deuxième partie (33). Ces vérins (34 à 37) peuvent ainsi assurer les déplacements précités des deuxièmes parties (33) des bras porteurs (7 à 10). Ces vérins (34 à 37) peuvent également être reliés au dispositif hydraulique du tracteur et être commandés depuis celui-ci.

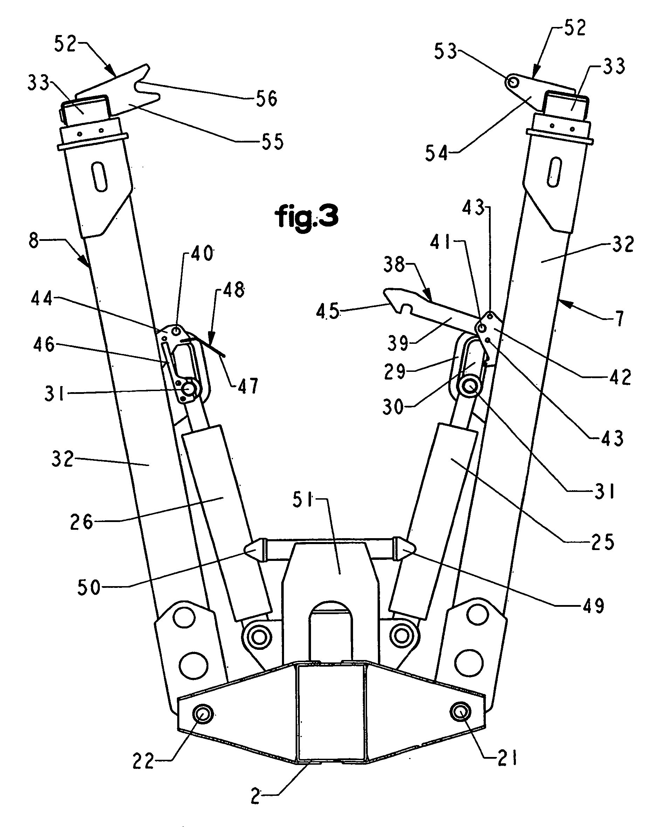

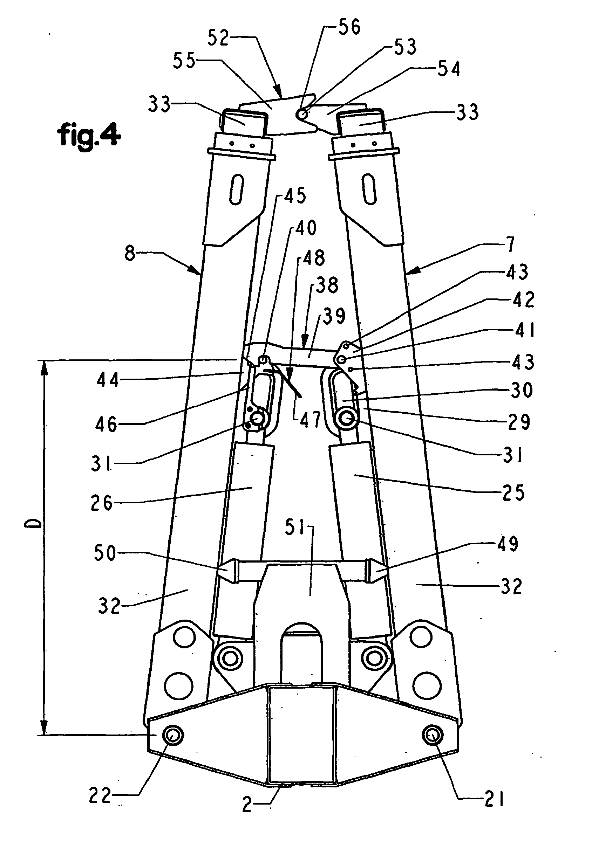

Comme cela ressort des figures 3 et 4, les bras porteurs (7 et 8) de la paire de rotors (11) située la plus en avant comportent des moyens de verrouillage (3 8) qui les relient entre eux et les bloquent l'un par rapport à l'autre dans la position de transport. Les bras porteurs (9 et 10) de la paire de rotors (11) située la plus en arrière peuvent comporter des moyens de verrouillage sensiblement identiques. Lesdits moyens de verrouillage (38) sont constitués par un verrou (39) qui est articulé sur le bras porteur (7) et un arrêt (40) disposé sur l'autre bras porteur (8). L'articulation du verrou (39) est réalisée au moyen d'un axe (41) qui est dirigé dans la direction d'avancement (A) et qui peut être fixé sur des pattes (42) solidaires de la première partie (32) du bras porteur (7). Les pattes (42) possèdent des butées (43) situées de part et d'autre du verrou (39) pour limiter ses déplacements et le maintenir dans une position à partir de laquelle il peut s'accrocher sur l'arrêt (40). L'arrêt (40) est constitué par un axe fixé au moyen de pattes (44) sur la première partie (32) du bras porteur (8). Le verrou (39) présente une extrémité en forme de crochet pouvant s'accrocher sur l'arrêt (40) et dont la partie avant forme une rampe (45) pouvant glisser sur ledit arrêt (40).

Ces moyens de verrouillage (38) sont éloignés de la poutre (2) du bâti (1). Ils se situent sur les bras porteurs (7 et 8) à une distance (D) de leurs axes d'articulation (21 et 22) sur le bâti (1) qui est égale ou supérieure à la moitié de la longueur desdits bras porteurs (7, 8) en position de transport (voir figure 4). Les contraintes exercées sur ces moyens (38) par les bras porteurs (7 et 8) sont ainsi moins importantes.

Selon un mode de réalisation particulièrement avantageux, lesdits moyens de verrouillage (38) se situent au voisinage des extrémités des vérins hydrauliques (25 et 26) qui sont reliées aux bras porteurs (7 et 8). La tige du vérin (26) qui est proche de l'arrêt (40) peut alors comporter un doigt de manoeuvre (46). Celui-ci est dirigé vers le verrou (39) en position de transport. Ils repoussent automatiquement ce dernier en vue de le dégager de l'arrêt (40) lorsque les vérins (25 et 26) sont commandés pour abaisser les bras porteurs (7 et 8) en position de travail. Les pattes (44) comportent une pièce (47) formant une rampe (48) pour retenir et guider le verrou (39).

Le bâti (1) comporte également des butées (49 et 50) qui sont éloignées des moyens de verrouillage (38) et qui arrêtent les bras porteurs (7 et 8) lorsqu'ils arrivent en position de transport. Ces butées (49 et 50) sont solidaires de supports (51) qui sont fixés sur la poutre (2) du bâti (1). Elles se situent entre les moyens de verrouillage (38) et les axes d'articulation (21 et 22) lorsque les bras porteurs (7 et 8) sont en position de transport. D'une manière préférentielle, elles sont plus proches desdits axes d'articulation (21 et 22) que des moyens de verrouillage (38). Leurs extrémités contre lesquelles s'appuient les bras porteurs (7 et 8) sont avantageusement élastiques. Celles-ci peuvent par exemple être réalisées en matière plastique.

La machine peut en sus comporter des moyens d'immobilisation (52) des bras porteurs (7 et 8) en position de transport. Ces moyens d'immobilisation (52) sont distants des moyens de verrouillage (38) et des butées (49 et 50). Ils se situent par exemple aux extrémités supérieures des bras porteurs (7 et 8) en position de transport. Lesdits moyens d'immobilisation (52) sont constitués par un arrêt (53) qui est lié à un support (54) solidaire du bras porteur (7) et par une patte (55) avec une encoche (56) en forme de V qui est solidaire de l'autre bras porteur (8). Ledit arrêt (53) peut avoir la forme d'un axe cylindrique. Celui-ci se situe dans le fond de l'encoche (56) lorsque les bras porteurs (7 et 8) sont en position de transport.

Les bras porteurs (9 et 10) de la paire de rotors (11) qui est située la plus en arrière, peuvent comporter des butées et des moyens d'immobilisation sensiblement identiques à ceux décrits ci-dessus.

Durant le travail, la machine est déplacée dans la direction d'avancement (A). Les bras porteurs (7 à 10) sont abaissés en position sensiblement horizontale au moyen des vérins hydrauliques (25 à 28) et les roues (15) des rotors (11) se déplacent sur le sol. Ces derniers peuvent suivre les dénivellations du sol grâce aux trous oblongs (30) qui permettent aux bras porteurs (7 à 10) de se déplacer en hauteur par rapport aux vérins hydrauliques (25 à 28). Lesdits rotors (11) sont disposés de manière à former un V (voir figure 1) et ils sont entraînés en rotation de sorte qu'ils tournent dans le sens des flèches F et G. Les outils (20) des deux rotors (11) les plus en avant sont commandés par leurs cames respectives de manière à ce qu'ils ramassent le fourrage sur les moitiés avant de leurs trajectoires, le déplacent vers la poutre (2) et le déposent sous la forme d'andains. Les outils (20) des deux rotors (11) les plus en arrière sont commandés pareillement. Ils ramassent tout le fourrage se trouvant sur leurs trajectoires, y compris celui déposé par les deux rotors (11) précédents et le rassemblent pour former un andain central de gros volume. La largeur de travail obtenue avec les rotors (11) peut être modifiée à l'aide des bras porteurs télescopiques (7 à 10) notamment en fonction de la densité du fourrage et de la capacité de traitement de la presse ou de l'ensileuse qui est utilisée pour ramasser l'andain.

Pour le transport, les bras porteurs (7 à 10) sont raccourcis au maximum au moyen des vérins hydrauliques (34 à 37) et sont relevés autour des axes (21 à 24) dans une position sensiblement verticale pour réduire l'encombrement. Ce relevage est effectué à l'aide des vérins hydrauliques (25 à 28) qui sont commandés pour qu'ils se raccourcissent. Dans un premier temps, leurs axes (31) glissent dans les trous oblongs (30) jusqu'à ce qu'ils viennent en butée. Ensuite, ils exercent une traction sur les bras porteurs (7 à 10) qui pivotent vers le haut autour des axes d'articulation (21 à 24) sur la poutre (2). Lorsqu'ils se rapprochent de la position de transport représentée sur la figure 4, l'extrémité (45) du verrou (39) glisse sur la rampe (48) puis sur l'arrêt (40). Ensuite, ledit verrou (39) s'accroche automatiquement sur l'arrêt (40) sous l'effet de son propre poids et relie les deux bras (7 et 8) entre eux de sorte qu'ils ne peuvent plus revenir en arrière.

Simultanément les bras porteurs (7 et 8) rencontrent les butées (49 et 50) qui définissent leur position de transport. Les extrémités élastiques de ces butées (49 et 50) sont alors légèrement comprimées.

Enfin, l'arrêt (53) des moyens d'immobilisation (52) pénètre en même temps dans l'encoche (56) et se loge dans le fond de celle-ci. Ledit arrêt (53) bloque ainsi les bras porteurs (7 et 8) l'un par rapport à l'autre et empêche quasiment tout pivotement sur les axes d'articulation (21 et 22) lorsque la machine passe sur une dénivellation.

Dans le cas ou les bras porteurs (9 et 10) des deux rotors (11) les plus en arrière sont équipés des mêmes moyens de verrouillage (38), des mêmes butées (49 et 50) et des mêmes moyens d'immobilisation (52) leur immobilisation en position de transport s'effectue de la même manière que celle qui vient d'être décrite.

Pour la mise en position de travail, le verrou (39) est dégagé de l'arrêt (40) afin de libérer les bras porteurs (7 et 8) des rotors (11). A cet effet, les vérins hydrauliques (25 et 26) sont commandés pour qu'ils s'allongent. Le doigt de manoeuvre (46) qui est lié à la tige du vérin hydraulique (26) repousse alors le verrou (39) et le retient éloigné de l'arrêt (40). Lesdits bras porteurs (7 et 8) pivotent ensuite vers l'extérieur au fur et à mesure de l'allongement des vérins hydrauliques (25 et 26). L'arrêt (53) des moyens d'immobilisation (52) quitte automatiquement l'encoche (56). Dès que les rotors (11) s'approchent ou touchent le sol, l'allongement des bras porteurs (7 et 8) peut être réglé en fonction de la largeur de travail recherchée.

Les bras porteurs (9 et 10) des rotors arrière (11) peuvent être déplacés de la même manière de leur position de transport dans la position de travail.

Il est bien évident que l'invention n'est pas limitée aux modes de réalisation décrits ci-dessus et représentés sur les dessins annexés. Des modifications restent possibles sans pour autant sortir du domaine de protection tel que défini par les revendications.

## Revendications

1. Machine de fenaison, notamment pour l'andainage de fourrage, comportant un bâti (1) portant au moins une paire de rotors d'andainage (11) pouvant être entraînés en rotation autour d'axes supports (13) sensiblement verticaux, lesquels rotors (11) sont liés à des bras porteurs (7 à 10) qui se situent sensiblement dans un même plan perpendiculaire à la direction d'avancement (A), l'un à droite et l'autre à gauche du bâti (1) et qui sont articulés sur ledit bâti (1) au moyen d'axes d'articulation (21 à 24) autour desquels ils peuvent être déplacés, d'une position de travail dans laquelle ils sont sensiblement horizontaux dans une position de transport dans laquelle ils sont sensiblement verticaux et vice versa et dans laquelle position de transport les bras porteurs (7 à 10) sont bloqués par des moyens de verrouillage (38) **caractérisé en ce que** les bras porteurs (7 à 10) sont déplacés au moyen de vérins hydrauliques (25 à 28) et que les moyens de verrouillage sont constitués par un verrou (39) articulé sur un des bras porteurs (7 à 10) d'au moins une paire de rotors (11) et par un arrêt (40) disposé sur l'autre bras porteur (7 à 10), ledit verrou (39) reliant lesdits bras porteurs entre eux et les bloquant l'un par rapport à l'autre dans la position de transport, la tige du vérin hydraulique (25 à 28) proche dudit arrêt (40) comportant un doigt de manoeuvre (46) pour dégager automatiquement le verrou (39) de cet arrêt (40) en vue de la mise en position de travail.

2. Machine selon la revendication 1, ***caractérisée par le fait* qu'**un dispositif de guidage (48) du verrou (39) se situe au voisinage de l'arrêt (40).

3. Machine selon la revendication 1, ***caractérisée par le fait* que** les moyens de verrouillage (38) sont éloignés de la poutre (2) du bâti (1).

4. Machine selon la revendication 3, ***caractérisée par le fait* que** les moyens de verrouillage (38) se situent sur les bras porteurs (7 à 10) à une distance (D) de leurs axes d'articulation (21 à 24) sur le bâti (1) qui est au moins égale à la moitié de la longueur desdits bras porteurs (7 à 10) en position de transport.

5. Machine selon l'une quelconque des revendications précédentes, ***caractérisée par le fait* que** les moyens de verrouillage (38) se situent au voisinage des extrémités des vérins hydrauliques (25 à 28) qui sont reliées aux bras porteurs (7 à 10).

6. Machine selon l'une quelconque des revendications précédentes, ***caractérisée par le fait* que** le verrou (39) peut être dégagé automatiquement de l'arrêt (40) au moyen du vérin hydraulique (26) déplaçant le bras porteur (8) qui est muni de l'arrêt (40).

7. Machine selon l'une quelconque des revendications précédentes, ***caractérisée par le fait* que** le bâti (1) comporte des butées (49, 50) distantes des moyens de verrouillage (38) et arrêtant les bras porteurs (7 à 10) lorsqu'ils arrivent en position de transport.

8. Machine selon la revendication 7, ***caractérisée par le fait* que** les butées (49, 50) se situent entre les axes d'articulation (21 à 24) des bras porteurs (7 à 10) et les moyens de verrouillage (38), lorsque les bras porteurs (7, 10) sont en position de transport.

9. Machine selon la revendication 7 ou 8, ***caractérisée par le fait* que** les butées (49, 50) comprennent des extrémités élastiques.

10. Machine selon l'une quelconque des revendications précédentes, ***caractérisée par le fait* qu'**elle comporte des moyens d'immobilisation (52) des bras porteurs (7 à 10) en position de transport, lesquels moyens d'immobilisation (52) sont distants des moyens de verrouillage (38).

11. Machine selon la revendication 10, ***caractérisée par le fait* que** les moyens d'immobilisation (52) se situent aux extrémités supérieures des bras porteurs (7 à 10) en position de transport.

12. Machine selon la revendication 10 ou 11, ***caractérisée par le fait* que** les moyens d'immobilisation (52) sont constitués par un arrêt (53) solidaire d'un des bras porteurs (7 à 10) de chaque paire de rotors (11) et d'une patte (55) avec une encoche (56) en forme de V, qui est solidaire de l'autre bras porteur (7 à 10) de chaque paire de rotors (11).

13. Machine selon la revendication 12, ***caractérisée par le fait* que** l'arrêt (53) se situe dans le fond de l'encoche (56) lorsque les bras porteurs (7 à 10) sont en position de transport.

## Claims

1. Haymaking machine, particularly for windrowing forage, comprising a frame (1) carrying at least one pair of windrowing rotors (11) that can be driven in rotation about substantially vertical supporting axes (13), which rotors (11) are connected to carrying arms (7 to 10) which are situated substantially in one and the same plane perpendicular to the direction of travel (A), the one on the right and the other on the left of the frame (1) and which are articulated on the said frame (1) by means of axes of articulation (21 to 24) about which they can be moved from a working position, in which they are substantially horizontal, to a transport position, in which they are substantially vertical, and vice-versa and in which transport position, the carrying arms (7 to 10) are locked by locking means (38), ***characterized in* that** the carrying arms (7 to 10) are moved by means of hydraulic jacks (25 to 28) and *that* the locking means are constituted by a bolt (39) articulated on one of the carrying arms (7 to 10) of at least one pair of rotors (11) and by a stop (40) arranged on the other carrying arm (7 to 10), the said bolt (39) connecting the said carrying arms together and locking them with respect to one another in the transport position, the rod of the hydraulic jack (25 to 28) close to the said stop (40) comprising an actuating finger (46) to automatically disengage the bolt (39) from this stop (40) to reach the working position.

2. Machine according to claim 1, ***characterized in* that** it comprises a guiding device (48) for the bolt (39) arranged close to the stop (40).

3. Machine according to claim 1, ***characterized in* that** the locking means (38) are distant from the beam (2) of the frame (1).

4. Machine according to claim 3, ***characterized in* that** the locking means (38) are situated on the carrying arms (7 to 10) at a distance (D) from their axes of articulation (21 to 24) on the frame (1) which is at least equal to half the length of the said carrying arms (7 to 10) in transport position.

5. Machine according to any one of the preceding claims, ***characterized in* that** the locking means (38) are situated in the vicinity of the ends of the hydraulic jacks (25 to 28) that are connected to the carrying arms (7 to 10).

6. Machine according to any one of the preceding claims, ***characterized in* that** the bolt (39) can be disengaged automatically from the stop (40) by means of the hydraulic jack (26) moving the carrying arm (8) which is fitted with the stop (40).

7. Machine according to any one of the preceding claims, ***characterized in* that** the frame (1) comprises abutments (49, 50) distant from the locking means (38) and stopping the carrying arms (7 to 10) when they reach the transport position.

8. Machine according to claim 7, ***characterized in* that** the abutments (49, 50) are situated between the axes of articulation (21 to 24) of the carrying arms (7 to 10) and the locking means (38), when the carrying arms (7, 10) are in the transport position.

9. Machine according to claim 7 or 8, ***characterized in* that** the abutments (49, 50) comprise elastic ends.

10. Machine according to any one of the preceding claims, ***characterized in* that** it comprises means (52) of immobilizing the carrying arms (7 to 10) in the transport position, which immobilizing means (52) are distant from the locking means (38).

11. Machine according to claim 10, ***characterized in* that** the immobilizing means (52) are situated at the upper ends of the carrying arms (7 to 10) in transport position.

12. Machine according to claim 10 or 11, ***characterized in* that** the immobilizing means (52) consist of a stop (53) rigidly fastened to one of the carrying arms (7 to 10) of each pair of rotors (11) and of a lug (55) with a V-shaped notch (56) which is rigidly fastened to the other carrying arm (7 to 10) of each pair of rotors (11).

13. Machine according to claim 12, ***characterized in* that** the stop (53) is situated in the bottom of the notch (56) when the carrying arms (7 to 10) are in transport position.

## Patentansprüche

1. Heuwerbungsmaschine, insbesondere zum schwaden von Viehfutter, mit einem Rahmen (1), der mindestens ein Paar von Schwadrotoren (11) trägt, die in Drehung um im Wesentlichen vertikale Stützachsen (13) angetrieben werden können, wobei die Rotoren (11) mit Tragarmen (7 bis 10) verbunden sind, die sich im Wesentlichen in einer selben Ebene senkrecht auf die Vorschubrichtung (A) befinden, der eine rechts und der andere links zum Rahmen (1), und die auf dem Rahmen (1) mittels Gelenkachsen (21 bis 24) angelenkt sind, um die sie von einer Arbeitsposition, in der sie im Wesentlichen horizontal sind, in eine Transportposition, in der sie im Wesentlichen vertikal sind, und umgekehrt verschoben werden können, und in welcher Transportposition die Tragarme (7 bis 10) durch Verriegelungsmittel festgelegt sind, ***dadurch gekennzeichnet,* dass** die Tragarme (7 bis 10) mittels Hydraulikzylindern (25 bis 28) verschoben werden und dass die Verriegelungsmittel (38) von einem Riegel (39), der auf einem der Tragarme (7 bis 10) mindestens eines Rotorpaars (11) angelenkt ist, und von einer Arretierung (40), die auf dem anderen Tragarm (7 bis 10) angeordnet ist, gebildet sind, wobei der Riegel (39) die Tragarme miteinander verbindet und sie zueinander in der Transportposition festlegt, wobei die Stange des Hydraulikzylinders (25 bis 28), die nahe der Arretierung (40) ist, einen Betätigungsfinger (46) umfasst, um den Riegel (39) automatisch aus dieser Arretierung (40) zu lösen, um in die Arbeitsposition überzugehen.

2. Maschine nach Anspruch 1, ***dadurch gekennzeichnet,* dass** eine Führungsvorrichtung (48) des Riegels (39) in der Nähe der Arretierung (40) angeordnet ist.

3. Maschine nach Anspruch 1, ***dadurch gekennzeichnet,* dass** die Verriegelungsmittel (38) vom Träger (2) des Rahmens (1) entfernt sind.

4. Maschine nach Anspruch 3, ***dadurch gekennzeichnet,* dass** sich die Verriegelungsmittel (38) auf den Tragarmen (7 bis 10) in einem Abstand (D) zu ihren Gelenkachsen (21 bis 24) auf dem Rahmen (1) befinden, der mindestens gleich der Hälfte der Länge der Tragarme (7 bis 10) in Transportposition ist.

5. Maschine nach irgend einem der vorhergehenden Ansprüche, ***dadurch gekennzeichnet,* dass** sich die Verriegelungsmittel (38) in der Nähe der Enden der Hydraulikzylinder (25 bis 28) befmden, die mit den Tragarmen (7 bis 10) verbunden sind.

6. Maschine nach irgend einem der vorhergehenden Ansprüche, ***dadurch gekennzeichnet,* dass** der Riegel (39) automatisch aus der Arretierung (40) mittels des Hydraulikzylinders (26) gelöst werden kann, der den Tragarm (8), der mit der Arretierung (40) versehen ist, verschiebt.

7. Maschine nach irgend einem der vorhergehenden Ansprüche, ***dadurch gekennzeichnet,* dass** der Rahmen (1) Anschläge (49, 50) umfasst, die von den Verriegelungsmitteln (38) entfernt sind und die Tragarme (7 bis 10) anhalten, wenn sie in Transportposition ankommen.

8. Maschine nach Anspruch 7, ***dadurch gekennzeichnet,* dass** sich die Anschläge (49, 50) zwischen den Gelenkachsen (21 bis 24) der Tragarme (7 bis 10) und den Verriegelungsmitteln (38) befinden, wenn die Tragarme (7, 10) in Transportposition sind.

9. Maschine nach Anspruch 7 oder 8, ***dadurch gekennzeichnet,* dass** die Anschläge (49, 50) elastische Enden umfassen.

10. Maschine nach irgend einem der vorhergehenden Ansprüche, ***dadurch gekennzeichnet,* dass** sie Festlegungsmittel (52) für die Tragarme (7 bis 10) in Transportposition umfasst, wobei die Festlegungsmittel (52) von den Verriegelungsmitteln (38) entfernt sind.

11. Maschine nach Anspruch 10, ***dadurch gekennzeichnet,* dass** sich die Festlegungsmittel (52) an den oberen Enden der Tragarme (7 bis 10) in Transportposition befinden.

12. Maschine nach Anspruch 10 oder 11, ***dadurch gekennzeichnet,* dass** die Festlegungsmittel (52) von einer Arretierung (53), die mit einem der Tragarme (7 bis 10) jedes Rotorpaars (11) fest verbunden ist, und einem Befestigungseisen (55) mit einer V-förmigen Kerbe (56) gebildet sind, das mit dem anderen Tragarm (7 bis 10) jedes Rotorpaars (11) fest verbunden ist.

13. Maschine nach Anspruch 12, ***dadurch gekennzeichnet,* dass** sich die Arretierung (53) am Boden der Kerbe (56) befindet, wenn die Tragarme (7 bis 10) in Transportposition sind.
